# EUROPEAN PATENT APPLICATION

(11) **EP 3 546 514 A1**
(43) Date of publication of application: **02.10.2019**
(21) Application number: 17873312.7
(22) Date of filing: 31.10.2017
(51) Int. Cl.: C08L 9/02, C08L 7/00, C08L 9/06, F16L 11/08

(54) **RUBBER COMPOSITION FOR HOSE, AND HOSE**

(30) Priority: 24.11.2016 JP 2016227665
(71) Applicant: Bridgestone Corporation, Tokyo 104-8340 (JP)
(72) Inventor: IIZUKA Munenori, Tokyo 104-8340 (JP)
(74) Representative: Oxley, Robin John George
(86) International application number: PCT/JP2017/039240
(87) International publication number: WO 2018/096875

(57) **Abstract**

The present invention provides a rubber composition for a hose, the rubber composition including acrylonitrile-butadiene rubber (NBR) as one rubber component, wherein the rubber composition for a hose is characterized in that said NBR component includes acrylonitrile-butadiene rubber having a weight-average molecular weight (Mw) of 280,000 or higher (specific high-molecular-weight NBR), said acrylonitrile-butadiene rubber (specific high-molecular-weight NBR) accounts for at least 60% by mass of the rubber component, and the acrylonitrile content included in the rubber component is 25-32% by mass. It is possible to provide a rubber composition that has improved toughness at high temperatures and exceptional heat resistance, oil resistance, and kink resistance, and that can be used especially suitably as the inner rubber of a hydraulic hose.

## Description

### TECHNICAL FIELD

The present invention relates to a rubber composition which has improved toughness at high temperature, is excellent in heat resistance, and is particularly suitable for use as an rubber in hydraulic hoses. The invention relates also to a hose produced using such a rubber composition.

### BACKGROUND ART

Generally, acrylonitrile-butadiene rubber (NBR), which is excellent in oil resistance and heat resistance, is used as a material for an inner rubber of a hydraulic hose. Acrylonitrile-butadiene rubber (NBR) is a polymer component of high polarity and has a role to secure oil resistance required as an important characteristic of the inner rubber of a hydraulic hose. The material properties of the inner rubber of a hydraulic hose are different from the required characteristics of an outer rubber, and from the viewpoint of contact with oil etc., cold resistance and kink resistance such as inner flaws and bulges at the time of metal fitting crimping are mentioned as required characteristics in addition to the oil resistance.

In order to improve the material of such inner rubber, for example, in JP 2010-121681 A, there is a statement that a blend of acrylonitrile-butadiene rubber (NBR) and butadiene rubber (BR) is used as the inner rubber of a rubber hose. In the above proposal, an inner rubber capable of achieving both workability and fatigue resistance by designing the molecular weight of the polybutadiene within an appropriate range is proposed.

However, in the above-described technology, there is no provision for improving the acrylonitrile-butadiene rubber (NBR) itself, which plays a large role in securing oil resistance, in an inner rubber of a hydraulic hose. For this reason, there was a problem such that the performance of the hydraulic hose, in particular, the heat resistance is not sufficient, or such rubber is cracked at the metal fitting crimped portion at high temperature, resulting in deterioration of the crimping property (durability performance) of the hose.

In addition, as rubber materials for hoses and the like in which acrylonitrile-butadiene rubber (NBR) is used, those described in the following Patent Literatures 2 to 5 may be mentioned.

### PRIOR ART DOCUMENTS

### PATENT DOCUMENTS

Patent Document 1: JP-A 2010-121681
Patent Document 2: JP-A 2011-1524
Patent Document 3: JP-A 2010-248319
Patent Document 4: JP-A 2004-262997
Patent Document 5: JP-A 2015-203092

### SUMMARY OF INVENTION

### TECHNICAL PROBLEM

The present invention has been made in view of the above circumstances, and it is an object of the present invention to provide a rubber composition which has improved toughness at high temperature and is excellent in heat resistance, oil resistance, and crimping resistance, and which can be suitably used particularly for an inner rubber of a hydraulic hose, as well as to provide a hose using the rubber composition.

### SOLUTION TO PROBLEM

In order to achieve the above-mentioned purpose, namely, in order to improve heat resistance and crimping resistance etc. in addition to oil resistance which is an important characteristic of an inner rubber of a hydraulic hose, the inventor of the present invention have intensively studied focusing on the characteristics of acrylonitrile-butadiene rubber which is a high polarity rubber. As a result, it was found that in a rubber composition for a hose containing an acrylonitrile-butadiene rubber (NBR) component as one of rubber components, wherein the NBR component contains an acrylonitrile-butadiene rubber (specific high-molecular-weight NBR) having a weight average molecular weight (Mw) of 280,000 or higher, the rubber composition was prepared in such a manner that the proportion of the specific high-molecular-weight NBR in the rubber component is at least 60% by weight and the acrylonitrile content in the rubber component is 25-32% by weight. By this, it is possible to provide a rubber composition having improved toughness at high temperature, excellent in heat resistance, and further excellent in various characteristics without generation of cracks in the rubber at a metal fitting crimping portion at high temperature. The present invention has been completed based on the finding that the required properties of the inner rubber can be sufficiently satisfied.

Accordingly, the present invention provides the following rubber composition for a hose, and a hose using the rubber composition.
1. A rubber composition for a hose, characterized by including acrylonitrile-butadiene rubber (NBR) as one rubber component, wherein the NBR component includes acrylonitrile-butadiene rubber having a weight average molecular weight (Mw) of 280,000 or higher (specific high-molecular-weight NBR), the acrylonitrile-butadiene rubber (specific high-molecular-weight NBR) accounts for at least 60% by weight of the rubber components, and the acrylonitrile content included in the rubber component is 25-32% by weight.
2. The rubber composition for a hose according to the above 1, wherein the NBR component is composed of two or more kinds of acrylonitrile butadiene rubber, and an average value of the weight average molecular weights (Mw) of these NBR components is 280,000 or higher.
3. The rubber composition for a hose according to the above 1 or 2, wherein all of the rubber components are acrylonitrile-butadiene rubber (NBR) having a weight average molecular weight (Mw) of 260,000 or higher.
4. The rubber composition for a hose according to the above 1 or 2, wherein at least one member selected from the group consisting of styrene-butadiene rubber (SBR), butadiene rubber (BR) and natural rubber (NR) is used as a rubber component other than the NBR component.
5. The rubber composition for a hose according to any one of the above 1 to 4, which is used as a material for an inner hose.
6. A hose including at least an inner rubber and a reinforcing layer composed of a brass-plated wire formed over the inner rubber, wherein the inner rubber is formed of the rubber composition according to any one of the above 1 to 5.
7. The hose according to the above 6, which is a hydraulic hose filled with hydraulic fluid for a hydraulically powered equipment.

### ADVANTAGEOUS EFFECTS OF INVENTION

According to the rubber composition for a hose of the present invention, by using acrylonitrile-butadiene rubber (NBR) having a relatively high molecular weight as a main material in the rubber components, toughness at high temperature can be improved so that a rubber hose excellent in heat resistance and oil resistance can be obtained. Moreover, according to the rubber composition of the present invention, it is possible to obtain a rubber hose having higher durability and reliability without occurrence of cracking at a metal fitting crimping portion at high temperature when compared with the conventional rubber composition for hoses using a relatively low molecular weight NBR.

### BRIEF DESCRIPTION OF DRAWINGS

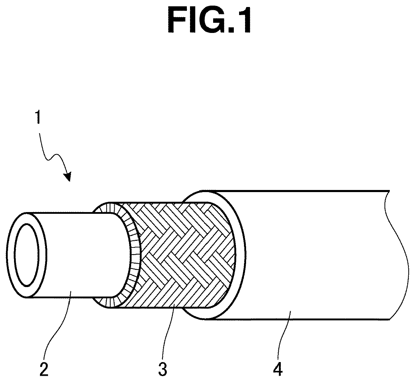

FIG. 1 is a schematic perspective view showing an embodiment of a hydraulic hose according to the present invention.

### DESCRIPTION OF EMBODIMENTS

Hereinafter, the present invention is described in more detail.

The rubber composition for a hose of the present invention is a rubber composition for a hose containing an acrylonitrile-butadiene rubber (NBR) component as one of rubber components. Further, the rubber composition for a hose of the present invention is a rubber composition containing a specific high-molecular-weight acrylonitrile-butadiene rubber in a predetermined ratio. In particular, such rubber composition is suitably used as a rubber that forms an inner rubber layer 2 in a hydraulic hose 1 shown in FIG. 1.

The rubber component used in the rubber composition for a hose of the present invention includes acrylonitrile-butadiene rubber (NBR) having a weight average molecular weight (Mw) of 280,000 or higher. The NBR is hereinafter referred to as "specific high-molecular-weight NBR".

The weight average molecular weight of the specific high-molecular-weight NBR used in the present invention is 280,000 or higher, preferably 300,000 or higher, and the upper limit value is preferably 400,000 or less. By using the specific high-molecular-weight NBR, a rubber vulcanized molded article can be improved in its heat resistance and durability. In addition, if the molecular weight of the specific high-molecular-weight NBR is too large, processability, such as rubber kneading operation, may be deteriorated. The weight average molecular weight described above is a weight average value in terms of polystyrene as estimated by GPC, and may be measured using "ECOSEC" manufactured by Tosoh Corporation, for instance.

The proportion of the specific high-molecular-weight NBR in the rubber components is at least 60% by weight, preferably at least 70% by weight, more preferably at least 80% by weight, and most preferably 100% by weight, that is, among the rubber components, all are preferably the specific high-molecular-weight NBR. If the proportion of such NBR is less than the above range, there is a risk that the heat resistance and the crimping resistance may be decreased, and the problems such as burst breakage may occur when used under high pressure.

In addition, it is preferable that all of the rubber components be acrylonitrile-butadiene rubber [NBR (1)] having a weight average molecular weight (Mw) of 260,000 or higher. By using such NBR (1) as all components of the rubber component, oil resistance and heat resistance can be more reliably ensured.

The acrylonitrile content (AN content) contained in the rubber component is preferably 25-32% by weight, particularly preferably 26-30% by weight. If the AN content exceeds 32% by weight, cold resistance become poor. On the other hand, if the AN content is less than 25% by weight, oil resistance become lowered. When two or more of NBRs each having a different AN content are mixed, the average value of the AN contents is made to satisfy the above numerical range.

In the present invention, it is preferable to appropriately adjust the blending amounts of the low nitrile NBR, the medium nitrile NBR, and the medium and high nitrile NBR, being NBR components, as described below from the viewpoint of mechanical property improvement and kink resistance at high temperature. That is, when the total component of acrylonitrile-butadiene rubber (NBR) is 100 parts by weight, the blending amount of the low nitrile NBR is preferably 10 to 30 parts by weight, and particularly preferably 15 to 25 parts by weight. The blending amount of the medium nitrile NBR is preferably 35 to 70 parts by weight per 100 parts by weight of the NBR component. Moreover, the blending amount of the medium and high nitrile NBR is preferably 20 parts by weight or more and less than 35 parts by weight, and particularly preferably 33 parts by weight or less as the upper limit value. In addition, the low nitrile NBR means an NBR whose acrylonitrile content (AN content) is less than 26% by weight, the medium nitrile NBR means an NBR whose AN content is 26% by weight or more and less than 30% by weight, and the medium and high nitrile NBR means an NBR whose AN content is 30% by weight or more and 35% by weight or less.

Furthermore, as a constitution of the NBR components in the rubber composition of the present invention, from the viewpoint of further enhancing heat resistance, two or more kinds of acrylonitrile-butadiene rubber may be used, and the weight average molecular weight (Mw) of these NBR components is preferably 280,000 or higher, more preferably 290,000 or higher, still more preferably 300,000 or higher, and most preferably 310,000 or higher. The upper limit of the average value of the weight average molecular weights (Mw) of the NBR component is preferably 380,000 or less, more preferably 350,000 or less. If the average value is too large, processability such as rubber kneading may be poor.

As specific embodiments (I) and (II) using two or more kinds of acrylonitrile-butadiene rubber as described above, for example, there are exemplified an embodiment (I) using two or more kinds of specific high-molecular-weight NBR being an essential component of the present invention and an embodiment (II) in which one or more kinds of specific high-molecular-weight NBR and one or more kinds of NBR other than the specific high-molecular-weight NBR are used.

As the components other than the NBR in the rubber components, a known natural or synthetic rubber may be blended. Illustrative examples thereof include synthetic rubbers (e.g. butadiene rubber, styrene-butadiene rubber, ethylene-propylene-diene rubber, isoprene rubber (IR), butyl rubber, halogenated butyl rubber, chloroprene rubber, isobutylene-isoprene rubber, silicone rubber, acrylic rubber, epoxidized natural rubber, acrylate-butadiene rubber, etc.); modified synthetic or natural rubbers wherein the end of molecular chain of these rubbers is modified; and the like; and one or two or more of these may be appropriately selected and used. Among these, it is particularly preferred to use at least one member selected from the group consisting of styrene-butadiene rubber (SBR), butadiene rubber (BR), and natural rubber (NR) from the viewpoint of compatibility with the specific high-molecular-weight NBR used in the present invention. In addition, when blending with the above rubber, it is preferable to set the amount to 20 parts by weight or less, especially 10 parts by weight or less, per 100 parts by weight of the rubber components.

In the rubber composition of the present invention, sulfur may be used as a crosslinking agent. It is preferable to set the blending amount of from 1.5 to 3 parts by weight, particularly from 1.5 to 2.5 parts by weight, and furthermore preferably from 2.0 to 2.5 parts by weight, per 100 parts by weight of the rubber component. If the blending amount exceeds 3 parts by weight, the heat resistance may be lowered, while if the blending amount is less than 1.5 parts by weight, the modulus of elasticity is lowered and the mechanical properties may be deteriorated.

In addition, zinc oxide (zinc white) may be blended as a vulcanization accelerator. The blending amount thereof is preferably from 0.5 to 10 parts by weight per 100 parts by weight of the rubber component. If the blending amount is less than 0.5 parts by weight, an effect of improving the vulcanization rate may be hardly obtained.

In the present invention, other crosslinking agents (vulcanizing agents), vulcanization accelerators and vulcanization accelerator aids, and commonly used additives such as carbons, antioxidants (anti-aging agents), plasticizers, petroleum resins, vulcanization retarders, waxes, antioxidants, fillers, foaming agents, oils, lubricants, tackifiers, UV absorbers, dispersants, compatibilizers, homogenizing agents can be appropriately blended with the rubber components as needed, as long as the effects of the present invention are not impaired.

A publicly known carbon may be used. For example, although not particularly limited, carbon blacks such as SRF, GPF, FEF, HAF, ISAF, SAF, FT, and MT may be mentioned, and in the present invention, SRF may be suitably used. Moreover, these carbon blacks may be used singly or in combination of two or more kinds thereof. The lower limit value of the blending amount of carbon black is preferably 50 parts by weight or more, more preferably 80 parts by weight or more, still more preferably 95 parts by weight or more, most preferably 100 parts by weight or more, per 100 parts by weight of the rubber component. On the other hand, the upper limit value of the blending amount of carbon black is preferably 150 parts by weight or less, more preferably 140 parts by weight or less, still more preferably 130 parts by weight or less, even still more preferably 120 parts by weight or less, most preferably 118 parts by weight or less. If the blending amount of the carbon black is too small, the crimping property may be poor. On the contrary, if the blending amount of the carbon black is too large, the viscosity of an unvulcanized rubber may increase too much, so that kneading, rolling, and extrusion workability may be deteriorated, and the rubber physical properties such as elongation decrease to tend to become brittle. Accordingly, necessary strength as a hydraulic hose may not be obtained.

As the antioxidant, known ones can be used though they are not particularly limited. One or two more kinds of phenolic antioxidants, imidazole-based antioxidants, amine-based antioxidants and the like may be used. The blending amount of the antioxidants is preferably from 0.5 to 3 parts by weight per 100 parts by weight of the rubber component.

As the plasticizer, known ones can be used though they are not particularly limited, and specific examples thereof include process oils such as aromatic oil, naphthenic oil, and paraffin oil; vegetable oils such as coconut oil and castor oil; synthetic oils such as alkylbenzene oil; and ester-type plasticizers such as DOA (dioctyl adipate). These may be used singly or in combination of two or more kinds thereof. The blending amount of the plasticizer is preferably from 5 to 15 parts by weight per 100 parts by weight of the rubber component.

When obtaining the rubber composition of the invention, the method of blending the various components is not particularly limited. The component starting materials may all be blended together and kneaded at one time, or kneading may be carried out by dividing up and blending the components in two or three stages. During kneading, a mixing apparatus such as a roll mill, internal mixer, and Banbury rotor may be used.

Further, regarding the curing conditions for curing the rubber composition, although not particularly limited, the conditions of from140 to 180°C for 10 to 90 minutes may be usually adopted.

In the case of manufacturing a rubber hose which has a reinforcing layer using the rubber composition of the present invention, a normal method may be adopted. For example, as shown in FIG. 1, when manufacturing a hydraulic hose 1 by sequentially laminating an inner rubber layer 2 (inner rubber) filled with hydraulic fluid, a reinforcing layer 3 for resisting the pressure of the hydraulic fluid, and an outer rubber layer 4 (outer cover rubber) for preventing the reinforcing layer 3 and the inner rubber layer 2 from being damaged, the following method can be used for the manufacturing a rubber hose.

First, the rubber composition of the present invention is extrusion molded over a core (mandrel) having a diameter approximately equal to the hose inner diameter, thereby to cover the mandrel and form an inner rubber layer 2 (inner rubber). This is the inner extrusion step. Next, a predetermined number of brass-plated wires are braided over the inner rubber layer 2 formed in the inner extrusion step so as to build up a reinforcing layer 3 (braiding step). Then, an outer rubber layer 4 (outer cover rubber) is formed by extruding the rubber composition to be an outer cover rubber of the hose over the reinforcing layer 3 (outer cover extrusion step). In addition, the outer side of the outer rubber layer 4 formed in the outer layer extrusion step is covered with a resin (resin mold covering step), and then vulcanization is carried out under the usual conditions (vulcanization step). After the vulcanization, the covering resin is peeled off (resin mold peeling step) and the mandrel is removed (mandrel extraction step), thereby giving a hydraulic hose 1 having the reinforcing layer 3 between the inner rubber 2 and the outer cover rubber 4.

The hydraulic hose 1 may be a three-layer construction as described above having, as successive layers from the inside: an inner rubber 2, a reinforcing layer 3 and an outer cover rubber 4. In cases of the improvements such as greater strength is required, although not shown in FIG. 1, the hose may be a five-layer construction in which the number of reinforcing layers has been increased to two and an intermediate layer (intermediate rubber) is disposed between the two reinforcing layers. That is, these constructions may be suitably selected according to such considerations as the required properties of the hose.

### EXAMPLES

The present invention will be more specifically described below by showing Examples and Comparative Examples, but the present invention is not limited to the following Examples.

### [Examples 1 to 6 and Comparative Examples 1 to 4]

Rubber compositions each having a formulation shown in Table 1 below of Examples 1 to 6 and Comparative Examples 1 to 4 were prepared. Each rubber composition was press-cured at 150°C for 60 minutes under 15 MPa to obtain a vulcanized rubber. With respect to the vulcanized rubber, tensile strength at break (room temperature and high temperature), oil resistant durability, and product durability (metal fitting crimping test) were evaluated as described below. The results are shown in Table 1. In addition, the blending amount in each following Table is all expressed by parts by weight.

### [Maximum Tensile Strength at Break/Tensile Elongation at Break]

A 2 mm-thick rubber sheet was prepared from the vulcanized rubber of each Example and punched out using a JIS No. 3 dumbbell to give a test piece. The maximum tensile strength at break and the tensile elongation at break were determined in accordance with JIS K-6301 using a Tensilon universal testing machine. In this test, the test piece was allowed to stand for 30 minutes in a room temperature (25°C) and high temperature (120°C) environment, and then a tensile test was carried out at the same temperature. The degrees of the maximum tensile strength at break and the tensile elongation at break of Comparative Example 1 were each expressed as "100". The larger the value, the better the tensile strength at break and the tensile elongation at break.

### [Oil Resistant Durability]

A 2 mm-thick rubber sheet was prepared from the vulcanized rubber of each Example and punched out into a test piece using a JIS No. 3 dumbbell and immersed in JIS No. 3 test oil (IRM-903) at 100°C for 72 hours. The maximum tensile strength at break and the tensile elongation at break were determined in accordance with JIS K-6301 using a Tensilon universal testing machine. The degrees of the maximum tensile strength at break and the tensile elongation at break of Comparative Example 1 were each expressed as "100". The larger the value, the better the oil resistant durability.

### [Product Durability]

The both ends of a hose using the vulcanized rubber of each Example as an inner rubber layer (innermost layer) were crimped with a metal fitting and left at 120°C for 30 minutes. Then, the metal fitting was removed, and the cracking of the crimped portion was confirmed. Evaluation of the horse was carried out as shown in the table according to the following criteria. The hose having no cracks shows that its durability is excellent.

⊚: There are no indentations and no cracks.

○: There are indentations but no cracks.

×: There are cracks.

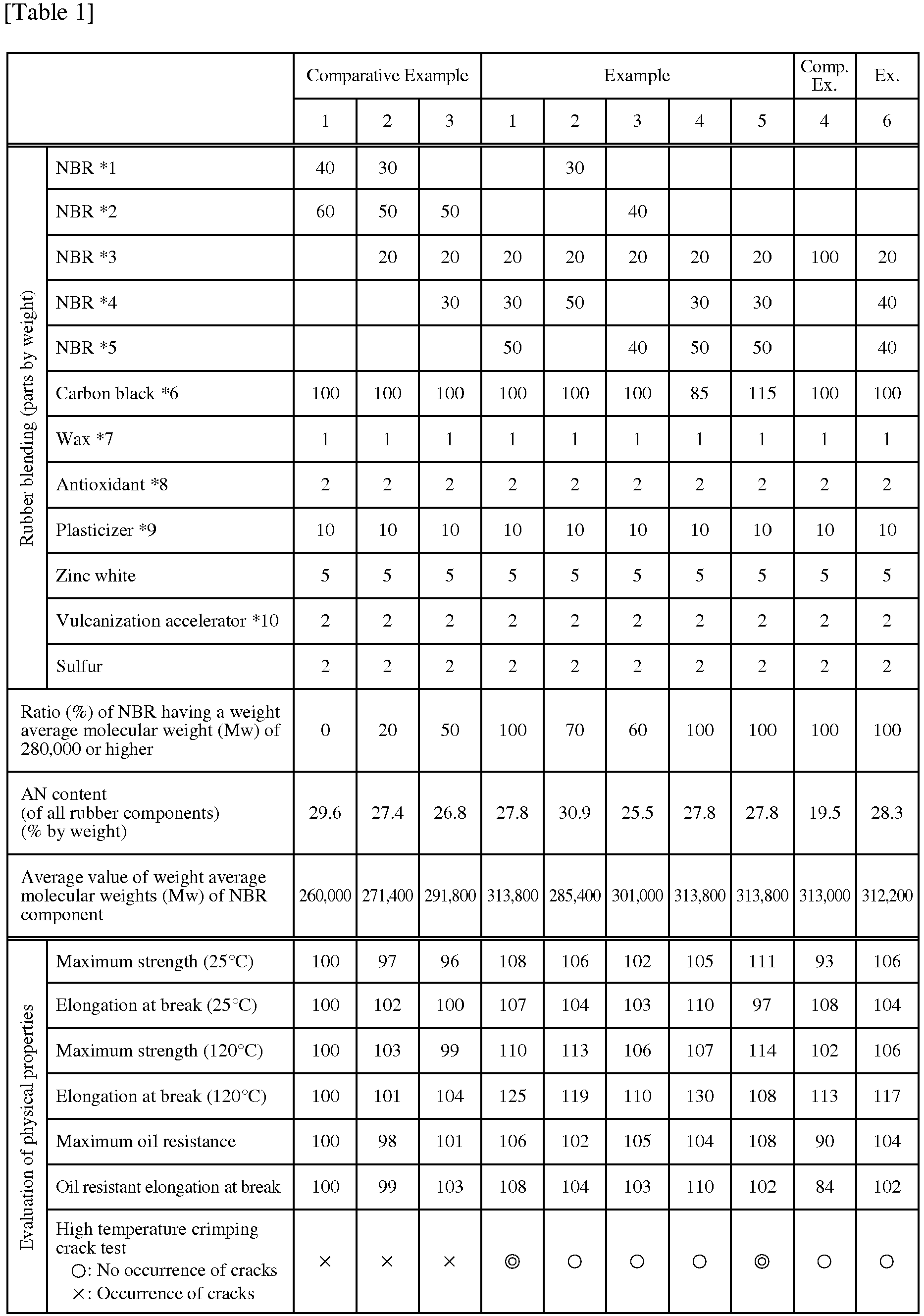

The details of each component in Table 1 are as follows.
1. "NBR ^{∗}1": "N230S", acrylonitrile-butadiene rubber (acrylonitrile content: 35% by weight, Mw: 236,000),
   manufactured by JSR Corporation
2. "NBR ^{∗}2": "N240S", acrylonitrile-butadiene rubber (acrylonitrile content: 26% by weight, Mw: 276,000),
   manufactured by JSR Corporation
3. "NBR ^{∗}3": "N250S", acrylonitrile-butadiene rubber (acrylonitrile content: 19.5% by weight, Mw: 313,000),
   manufactured by JSR Corporation
4. "NBR ^{∗}4": "KRYNAC 3370", acrylonitrile-butadiene rubber, (acrylonitrile content: 33% by weight, Mw: 304,000),
   manufactured by ARLANXEO
5. "NBR ^{∗}5": "KRAYNAC 2865", acrylonitrile-butadiene rubber (acrylonitrile content: 28% by weight, Mw: 320,000),
   manufactured by ARLANXEO
6. Carbon black: SRF grade carbon black "Asahi #50"
7. Wax: stearic acid
8. Antioxidant: "NONFLEX RD",
   manufactured by Seiko Chemical Co., Ltd.
9. Plasticizer: dioctyl adipate,
   manufactured by New Japan Chemical Co., Ltd.
10. Vulcanization accelerator: "NOCCELER DM-T",
   manufactured by Ouchi Shinko Chemical Industrial Co., Ltd.

The following is seen from the results of Table 1.

The rubber composition of Comparative Example 1 had none of an NBR having a weight average molecular weight of 280,000 or higher in the rubber component, as the result of which, a crack was generated in the crimped portion in a high temperature crimping crack test of vulcanized rubbers.

In the rubber composition of Comparative Example 2, the proportion of an NBR having a weight average molecular weight of 280,000 or higher in the rubber component was 20% by weight, as the result of which the maximum tensile strength at break of the vulcanized rubber at room temperature (25°C) decreased, and a crack was generated in the crimped portion in a high temperature crimping crack test.

In the rubber composition of Comparative Example 3, the proportion of an NBR having a weight average molecular weight of 280,000 or higher in the rubber component was 50% by weight, as the result of which the maximum tensile strength at break of a vulcanized rubber at room temperature (25°C) decreased and also a crack was generated in the crimped portion in a high temperature crimping crack test.

In the rubber composition of Comparative Example 4, the content of acrylonitrile in the rubber component was 19.5% by weight, as the result of which the maximum tensile strength at break of a vulcanized rubber at room temperature (25°C) decreased. In addition, it is apparent that the rubber composition is inferior in oil resistant durability.

### REFERENCE SIGNS LIST

1 a hydraulic hose
2 an inner rubber layer (an inner rubber)
3 a reinforcing layer
4 an outer rubber layer (an outer cover rubber)

## Claims

1. A rubber composition for a hose, **characterized by** comprising acrylonitrile-butadiene rubber (NBR) as one rubber component, wherein the NBR component includes acrylonitrile-butadiene rubber having a weight average molecular weight (Mw) of 280,000 or higher (specific high-molecular-weight NBR), the acrylonitrile-butadiene rubber (specific high-molecular-weight NBR) accounts for at least 60% by weight of the rubber components, and the acrylonitrile content included in the rubber component is 25-32% by weight.

2. The rubber composition for a hose according to claim 1, wherein the NBR component is composed of two or more kinds of acrylonitrile-butadiene rubber, and an average value of the weight average molecular weights (Mw) of these NBR components is 280,000 or higher.

3. The rubber composition for a hose according to claim 1 or 2, wherein all of the rubber components are acrylonitrile-butadiene rubber (NBR) having a weight average molecular weight (Mw) of 260,000 or higher.

4. The rubber composition for a hose according to claim 1 or 2, wherein at least one member selected from the group consisting of styrene-butadiene rubber (SBR), butadiene rubber (BR), and natural rubber (NR) is used as a rubber component other than the NBR component.

5. The rubber composition for a hose according to any one of claims 1 to 4, which is used as a material for an inner hose.

6. A hose comprising at least an inner rubber and a reinforcing layer composed of a brass-plated wire formed over the inner rubber, wherein the inner rubber is formed of the rubber composition according to any one of claims 1 to 5.

7. The hose according to claim 6, which is a hydraulic hose filled with hydraulic fluid for hydraulically powered equipment.
